# EUROPÄISCHE PATENTSCHRIFT

(11) **EP 2 133 301 B1**
(45) Veröffentlichungstag und Bekanntmachung des Hinweises auf die Patenterteilung: **29.06.2011**
(21) Anmeldenummer: 09004076.7
(22) Anmeldetag: 21.03.2009
(51) Int. Cl.: B65H 31/30

(54) **Drehhubtisch**
Rotating lifting table
Table élévatrice rotative

(30) Priorität: 23.05.2008 CH 7822008
(43) Veröffentlichungstag der Anmeldung: 16.12.2009
(73) Patentinhaber: Ferag AG, 8340 Hinwil (CH)
(72) Erfinder: Dax, Roman, 8344 Bäretswil ZH (CH)
(74) Vertreter: Schaad, Balass, Menzl & Partner AG

(56) Entgegenhaltungen:
- EP-A- 1 362 817
- EP-A1- 1 852 379
- GB-A- 2 203 401

## Beschreibung

Die vorliegende Erfindung betrifft einen Drehhubtisch gemäss dem Oberbegriff des Anspruchs 1.

Drehhubtische zur Verarbeitung von flächigen Gegenständen, insbesondere von Druckereiprodukten, wie bedruckten Blättern, Zeitungen, Zeitschriften usw., sind allgemein bekannt. Sie sind mit einer dreh- und / oder heb- und senkbaren Drehhubtischplatte ausgestattet, auf bzw. oberhalb derer die flächigen Gegenstände zu liegen kommen. Drehhubtische weisen in der Regel zugeordnete Ausstossmittel auf, mittels denen die auf der Drehhubtischplatte liegenden flächigen Gegenstände in einer gewählten Ausstossrichtung hinausgeschoben werden können, siehe z.β. EP 1362817A1.

Die Drehbarkeit der Drehhubtischplatte ist insbesondere bei der Bildung von Stapeln aus gefalteten Druckereiprodukten von Vorteil. So werden zur Erhöhung der Stabilität derartiger Stapel jeweils um 180° bezüglich einer rechtwinklig zur Drehhubtischplatte orientierten Drehachse gegeneinander gedrehte Teilstapel alternierend übereinander geschichtet. Auf diese Weise gelangen jeweils abwechselnd falzseitige dickere Bereiche und dünnere Bereiche der freien Seitenkanten von Druckereiprodukten aufeinanderfolgender Teilstapel übereinander zu liegen, so dass Höhenunterschiede der einzelnen Teilstapel aufgrund ihrer bereichsweise unterschiedlichen Dicken ausgeglichen werden.

Drehhubtischplatten sind bevorzugt heb- und senkbar, um beispielsweise gezielt Fallhöhen für Druckereiprodukte oder aus ihnen gebildete Teilstapel zu verringern oder um zur Komprimierung von Stapeln diese gegen oberhalb der Drehhubtischplatte angeordnete Presselemente drücken zu können.

Die Ausbildung sowohl der Drehbarkeit wie auch der Heb- und Senkbarkeit der Drehhubtischplatte ist nicht in jedem Fall zwingend erforderlich. Vielmehr kann der im Folgenden beschriebene und beanspruchte Drehhubtisch auch bei einer eingeschränkten Funktionalität, also bei einer Nutzung als Drehtisch, Hubtisch oder auch nur als Stapeltisch, völlig analog eingesetzt werden.

Ein Drehhubtisch zur Auflage von Druckereiprodukten ist beispielsweise in der EP-A-1852379 beschrieben. Auf einem Drehhubzylinder ist dabei eine Drehhubtischplatte angeordnet, die an zwei sich gegenüberliegenden Seiten mit Ausstossvorrichtungen, die Ausstossmittel zum Ausstossen der in Stapel angeordneten Druckereiprodukte aufweisen, ausgestattet ist. Eine die Druckereiprodukte verdrängende Bewegung der Ausstossmittel über die Drehhubtischplatte hinweg definiert dabei eine Ausstossrichtung. Die Drehhubtischplatte weist eine konvex nach oben gewölbte Auflagefläche mit einem Querfirstbereich auf, dessen Längsausdehnung wenigstens nahezu rechtwinklig zur Ausstossrichtung verläuft. Die im Stapel übereinanderliegenden flächigen Gegenstände passen sich aufgrund ihrer flächenartigen Ausbildung und ihres Eigengewichts der gewölbten Auflagefläche an und verleihen durch ihre Profilierung dem Stapel eine erhöhte Stabilität.

Insbesondere beim Ausstossen der Stapel flächiger Produkte ergibt sich das Problem, dass die Formstabilität des Stapels und die Unversehrtheit der flächigen Produkte beim Ausstossen beeinträchtigt werden kann.

Daher besteht die Aufgabe der vorliegenden Erfindung darin, die Formstabilität und Unversehrtheit der Stapel aus flächigen Gegenständen bei deren Abtransport von einem Drehhubtisch zu verbessern.

Diese Aufgabe wird durch einen Drehhubtisch gemäss dem Anspruch 1 gelöst. Besonders bevorzugte Ausführungsformen sind mit den in den abhängigen Ansprüchen aufgeführten Merkmalen ausgestattet.

Der erfindungsgemässe Drehhubtisch ist mit einer Drehhubtischplatte zur Auflage von flächigen Gegenständen, insbesondere Druckereiprodukten ausgestattet. Die Drehhubtischplatte begrenzt nach unten wenigstens teilweise einen Stapelschacht, der durch zwei einander gegenüberliegende Ausstossvorrichtungen definiert wird und in welchem die flächigen Gegenstände zur Bildung eines Stapels gesammelt werden. Die Ausstossvorrichtungen, mittels denen die gestapelten flächigen Gegenstände in wenigstens einer Ausstossrichtung abtransportiert werden können, sind auf einer drehfest mit der Drehhubtischplatte verbundenen Drehplatte montiert.

Erfindungsgemäss ist der Drehhubtisch mit wenigstens einer Gleitplatte ausgestattet, die Luftaustrittsöffnungen aufweist. Bei einem Abtransport des Stapels flächiger Gegenstände wird ein reibungsarmes Gleiten aus dem Stapelschacht in die Ausstossrichtung ermöglicht, indem Luft aus den Luftaustrittsdüsen gedrückt wird, so dass sich ein Luftpolster zwischen dem untersten flächigen Gegenstand des Stapels und der Gleitplatte bildet. Durch das reibungsarme Gleiten aus dem Stapelschacht besteht eine geringere Gefahr der Verletzung der flächigen Gegenstände und der Verformung bzw. des Umfallens des Stapels. Gleichzeitig wird von den Ausstossvorrichtungen beim Herausschieben des Stapels aus dem Stapelraum ein geringerer Kraftaufwand gefordert.

In besonders bevorzugten Ausführungsformen greift während des Ausstossens des Stapels die Drehhubtischplatte in die Gleitplatte ein. In einer weiteren bevorzugten Ausführungsform ist die Gleitplatte an der Drehplatte fixiert.

Im Folgenden wird anhand von Zeichnungen eine besonders bevorzugte Ausführungsform des erfindungsgemässen Drehhubtisches detailliert beschrieben. Die Figuren zeigen rein schematisch im Einzelnen:
- Fig. 1: in einer Seitenansicht mit teilweiser Schnittdarstellung einen erfindungsgemässen Drehhubtisch mit einer Drehhubtischplatte in abgesenkter und angehobener Position (strich- punktierte Linie) und seitlich angeordneten Gleitplatten;
- Fig. 2: in einer Draufsicht den in Fig. 1 gezeigten Drehhubtisch in einer Dreh-Grundstellung mit den seitlich angeordneten Gleitplatten und zugeordneten Wegförderern; und
- Fig. 3: in einer Draufsicht den in Fig. 1 und Fig. 2 gezeigten Drehhubtisch in einer Dreh- Endstellung.

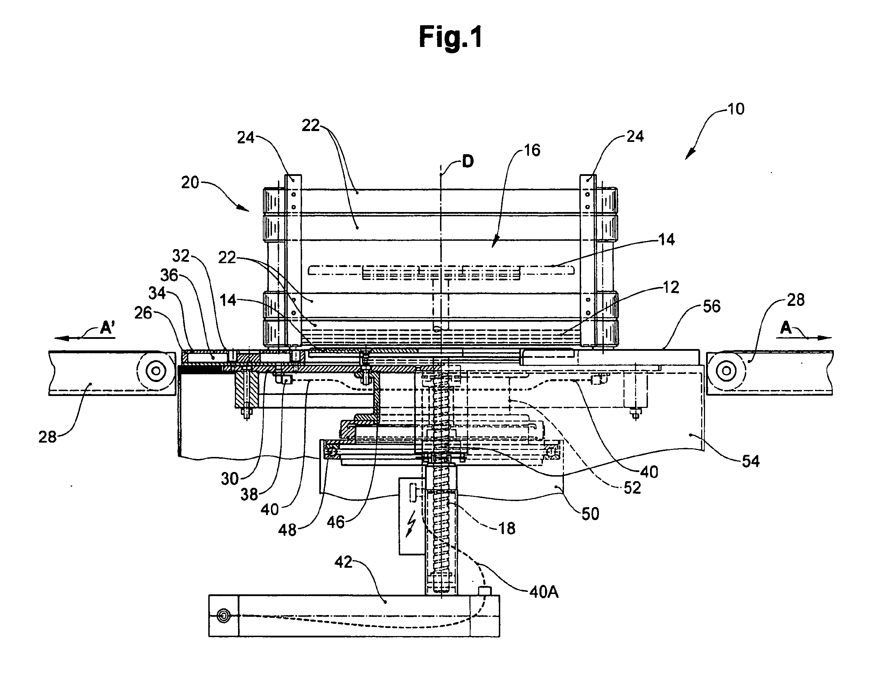

Der in Fig. 1 gezeigte erfindungsgemässe Drehhubtisch 10 für flächige Gegenstände 12, insbesondere für Druckereiprodukte, wie Zeitschriften, Zeitungen, Papierlagen usw., weist eine Drehhubtischplatte 14 zur Auflage der flächigen Gegenstände 12 auf, die einen Stapelschacht 16 wenigstens teilweise nach unten hin begrenzt. Die Drehhubtischplatte 14 ist in Fig. 1 in einer abgesenkten Hub-Grundstellung und einer angehobenen Stellung (strich-punktierte Linien) gezeigt. Die Drehhubtischplatte 14 ist zentral auf einer Drehspindelvorrichtung 18 gelagert, welche die Heb- und Senkbarkeit der Drehhubtischplatte 14 gewährleistet. Die Drehspindelvorrichtung 18 ist Teil eines Hubmittels, das vorzugsweise elektrisch, hydraulisch oder pneumatisch betreibbar ist.

Der Stapelschacht 16 wird definiert durch zwei Ausstossvorrichtungen 20, die einander gegenüberliegen und von denen in Fig. 1 lediglich eine Ausstossvorrichtung 20 sichtbar ist. Die Ausstossvorrichtungen 20 sind detailliert beispielsweise in der EP-A-1445224 beschrieben. Sie sind mit an Transportmitteln 22 befestigten Ausstossmitteln in Form von Winkelprofilen 24 ausgestattet. Die Winkelprofile 24 begrenzen den Stapelschacht 16 seitlich und ermöglichen die räumlich definierte Bildung von Stapeln aus flächigen Gegenständen 12.

Zum Ausstossen der dann in einem Stapel angeordneten flächigen Gegenstände 12 werden die Winkelprofile 24 in die ebenfalls durch die Ausstossvorrichtungen 20 definierten Ausstossrichtungen A, A' bewegt und die Stapel gleitend über erfindungsgemäss ausgebildete Gleitplatten 26 zu zugeordneten Förderern, insbesondere Wegförderern 28, geschoben. In Fig. 1 ist in der teilweisen Schnittdarstellung ein Schnitt durch eine der Gleitplatten 26 gezeigt.

Die Gleitplatten 26 sind fest an einer mit der Drehhubtischplatte 14 mitdrehbaren Drehplatte 30 angeordnet. Sie weisen eine obere Gleitfläche 32 mit Luftaustrittsöffnungen 34 auf, aus denen mit Druck beaufschlagte Luft entweichen kann, so dass sich beim Herausschieben eines Stapels flächiger Gegenstände 12 zwischen dem untersten flächigen Gegenstand 12 des Stapels und der Gleitfläche 32 ein Luftpolster bildet. Der auf diesem Luftpolster "schwebende" Stapel flächiger Gegenstände 12 wird zum Ausstossen durch die Winkelprofile 24 der Ausstossvorrichtungen 20 in eine der Ausstossrichtungen A, A' zu dem jeweiligen Wegförderer 28 geschoben.

Die Gleitplatten 26 weisen im Inneren einen Hohlraum 36 auf, zu dem über Luftzufuhrstutzen 38 die mit Druck beaufschlagte Luft geleitet wird, die anschliessend aus dem Hohlraum 36 durch die Luftaustrittsöffnungen 34 austritt. Die Luftaustrittsöffnungen 34 können sich dabei vorzugsweise vom Hohlraum 36 aus in Richtung zur oberen Gleitfläche 32 hin erweitern. Natürlich können die Querschnitte der Luftaustrittsöffnungen 34 der jeweiligen Anwendung angepasst werden.

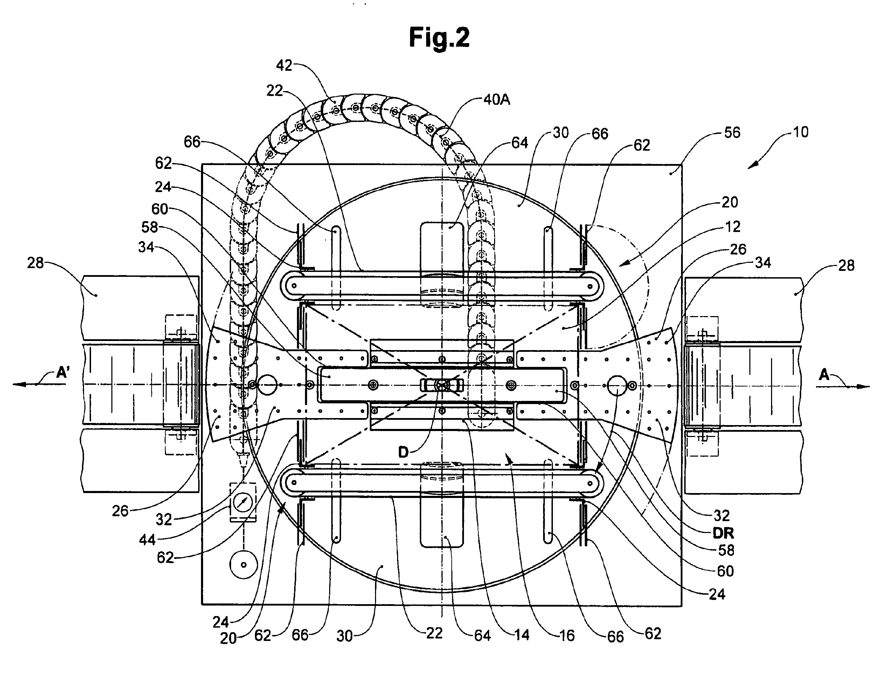

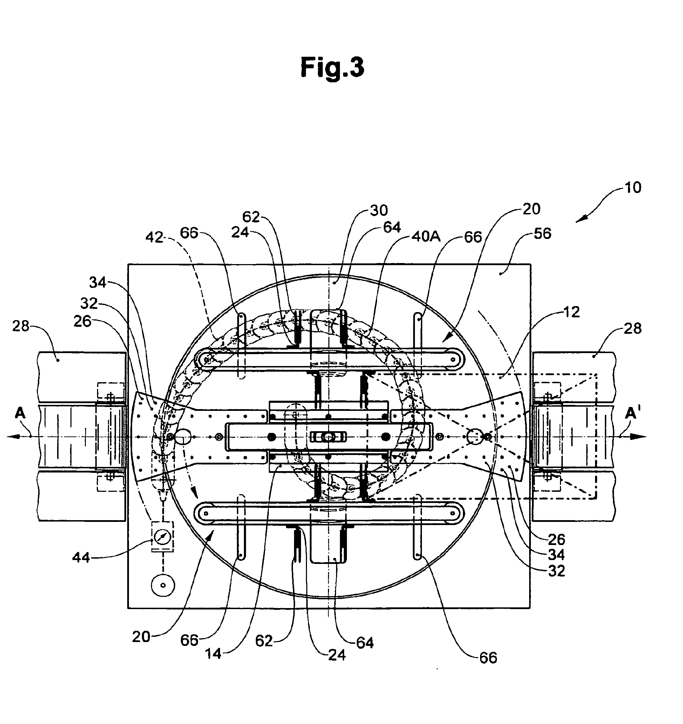

Die Luftzufuhrstutzen 38 sind über Luftzufuhrleitungen 40, die in Fig. 1 gestrichelt gezeichnet sind, mit einem nicht gezeigten Reservoir unter Druck stehender Luft strömungsverbunden. Bei der hier gezeigten Ausführungsform sind die beiden Luftzufuhrstutzen 38 der beiden Gleitplatten 26 über ein T-Stück miteinander verbunden und eine gemeinsame Luftzufuhrleitung 40A, die entlang der Drehspindelvorrichtung 18 geführt ist, tritt über ein drehhubtischseitig fest bezüglich der Drehplatte 30 angeordnetes Ende in eine bewegliche Kabelschleppe 42 ein. Innerhalb der beweglichen Kabelschleppe 42 ist die vorzugsweise flexible gemeinsame Luftzufuhrleitung 40A zu einer Druckregelvorrichtung 44, die in Fig. 2 und Fig. 3 gezeigt ist, geführt und darüber mit dem Reservoir verbunden.

Die Druckregelvorrichtung 44 bildet eine Steuervorrichtung für die Festlegung des Drucks der aus den Luftaustrittsöffnungen 34 der Gleitplatten 26 entweichenden Luft. Der Luftdruck wird dabei vorzugsweise in Abhängigkeit vom Gewicht der aufliegenden flächigen Gegenstände und / oder dem Dreh-Hub-Zustand der Drehhubtischplatte 14 festgelegt. An dieser Stelle sei bemerkt, dass natürlich das Medium Luft auch durch ein anderes gasförmiges Medium ersetzt werden kann.

Die im Wesentlichen kreisscheibenförmige Drehplatte 30 ist über einen glockenförmigen Träger 46 mittels eines Kugellagers 48 drehbar auf einem Tischgestell 50 gelagert. Koaxial im Inneren des glockenförmigen Trägers 46 ist die Drehspindelvorrichtung 18, die sich im Wesentlichen rechtwinklig zur Drehplatte 30 erstreckt, angeordnet. Der Antrieb einer Drehbewegung der Drehplatte 30, die drehfest mit der Drehhubtischplatte 14 verbunden ist, erfolgt durch einen nicht gezeigten Riementrieb, dessen Riemen bzw. Zahnriemen auf der äusseren Umfangsfläche eines Nabenelements 52 des glockenförmigen Trägers 46 aufliegt.

Der Riementrieb wird beispielsweise mittels eines nicht gezeigten Elektromotors betrieben.

Das Tischgestell 50 ist drehfest mit einem Drehhubtischgehäuse 54 verbunden, das oberseitig eine ortsfeste Grundplatte 56 aufweist.

In der Draufsicht auf den erfindungsgemässen Drehhubtisch 10 in Fig. 2 ist besonders gut der durch die Ausstossvorrichtungen 20 gebildete Stapelschacht 16 und die Ausstossrichtungen A, A', in denen sich die zugeordneten Wegförderer 28 anschliessen, sichtbar. Wie der Abbildung, in welcher der Drehhubtisch 10 in einer Dreh-Grundstellung gezeigt ist, entnommen werden kann, stehen breitseitig an der Drehhubtischplatte 14 ausgeformte zungenartige Drehhubtischplattenfortsätze 58 im Eingriff mit zugeordneten, U-förmigen Gleitplattenausnehmungen 60 der Gleitplatte 26. Die fest an der Drehplatte 30 angeordneten Gleitplatten 26 drehen sich bei einer Drehung der Drehplatte 30 um eine durch die Längsachse der Drehspindelvorrichtung definierte Drehachse D mit und überstreichen dabei mit ihren radial äusseren Endbereichen die Grundplatte 56.

Beim Ausstossen eines Stapels flächiger Gegenstände 12 aus dem Stapelschacht 16 werden im abgesenkten Zustand der Drehhubtischplatte 14 der Stapel flächiger Gegenstände 12 von den Winkelprofilen 24 der beiden Ausstossvorrichtungen 20, die jeweils synchron angetrieben werden, über die Drehhubtischplatte 14 hinweg, reibungsarm gleitend über die Gleitflächen 32 der Gleitplatten 26 in eine der Ausstossrichtungen A, A' auf den unmittelbar gegenüberliegenden Wegförderer 28 aufgeschoben.

Wie Fig. 2 weiter zu entnehmen ist, sind die Winkelprofile 24 in freien Endbereichen ihrer von den Transportmitteln 22 abstehenden Schenkel mit im Querschnitt U-förmigen Profilfortsätzen 62 ausgestattet. Diese Profilfortsätze 62 sind vorzugsweise aus einem elastischen Kunststoffmaterial geformt und vermindern beim Hinausschieben der Stapel flächigen Gegenstände 12 das Verletzungsrisiko für die flächigen Gegenstände 12.

Die sich gegenüberliegenden Ausstossvorrichtungen 20 sind jeweils mittig bezüglich ihrer Längsachse auf der dem Stapelschacht 16 gegenüberliegenden Aussenseite mit Formatanpassungselementen 64 ausgestattet. Diese Formatanpassungselemente 64 erlauben eine Verschiebung der Ausstossvorrichtungen 20 entlang der Längsrichtung von in der Drehplatte 30 ausgebildeten Langlöchern 66. Eine weitere Formatanpassung ist über eine Verschiebung der Winkelprofile 24 entlang den Transportmitteln 22 der Ausstossvorrichtung 20 vornehmbar.

Wie Fig. 2 ebenfalls entnehmbar ist, sind die Luftaustrittsöffnungen 34 der Gleitplatten 26 in einem sich wiederholenden Muster, vorzugsweise wenigstens abschnittsweise regelmässig verteilt angeordnet. Auf diese Weise wird eine möglichst gleichmässige Ausbildung eines Luftpolsters unter dem Stapel der flächigen Gegenstände 12 bewirkt. Dabei wird ein zu schnelles Entweichen der Luft aus dem Luftpolster dadurch vermindert, dass äussere Endbereiche der flächig übereinanderliegenden flächigen Gegenstände 12 nach unten in Richtung der Drehplatte 30 bzw. der Grundplatte 56 hin gewölbt sind.

In der in Fig. 2 gezeigten Dreh-Grundstellung des Drehhubtisches 10, wie sie etwa beim Ausstossen eines Stapels flächiger Gegenstände 12 eingenommen wird, beschreibt die bewegliche Kabelschleppe 42, in welcher die gemeinsame Luftzufuhrleitung 40A geführt ist, einen im Wesentlichen U-förmigen Bogen. Bei einer Drehung um die Drehachse D in eine Drehrichtung DR, wie sie in Fig. 2 durch einen Pfeil angegeben ist, um 180°, wird die in Fig. 3 gezeigte Dreh-Endstellung eingenommen.

In dieser Dreh-Endstellung ist die bewegliche Kabelschleppe 42 zusammen mit der gemeinsamen Luftzufuhrleitung 40A schneckenförmig umgeformt. Beim Übergang von der Dreh-Grundstellung in die Dreh-Endstellung werden die Gleitplatten 26 jeweils auf den in der Dreh-Grundstellung entgegengesetzt angeordneten Wegförderer 28 zubewegt. Bei der Drehung der Stapel flächiger Gegenstände 12 werden somit die Ausstossrichtungen A, A' zu den jeweils anderen Wegförderern 28 hin ausgerichtet.

In Fig. 3 ist angedeutet, wie durch synchrones Bewegen der Winkelprofile 24 mit ihren Profilfortsätzen 62 entlang der Ausstossrichtung A' der Stapel flächiger Gegenstände 12 von der Drehhubtischplatte 14 über die Gleitplatte 26 zum zugeordneten Wegförderer 28 bewegt wird.

Natürlich kann die spezifische Form der Gleitplatten 26 und deren Gleitflächen 32 den spezifischen Erfordernissen angepasst werden. So ist es möglich, dass, wie in dem beschriebenen Ausführungsbeispiel, die Gleitplatten 26 in den Stapelschacht 16 hineinreichen oder erst ausserhalb des Stapelschachtes angeordnet sind.

Zudem ist es möglich, auch die Drehhubtischplatte 14 im Sinne der Gleitplatten 26 mit Luftaustrittsöffnungen 34 zu versehen, aus denen mit Druck beaufschlagte Luft zur Erzeugung eines Luftpolsters unterhalb des Stapels flächiger Gegenstände 12 entweicht. Entgegen einer drehfesten Anordnung der Gleitplatten 26 auf der Drehplatte 30, wie im vorgängig beschriebenen Ausführungsbeispiel, ist es auch vorstellbar, die Gleitplatten 26 ortsfest an der Grundplatte 56 des Drehhubtischgehäuses 54 zu befestigen. Neben den im beschriebenen Ausführungsbeispiel im Wesentlichen horizontal verlaufenden, ebenen Gleitflächen 32 der Gleitplatten 26 sind natürlich auch geneigte bzw. profilierte Gleitflächen 32 denkbar.

In all diesen Fällen wird jedoch, wie im beschriebenen Ausführungsbeispiel, mittels des unter dem Stapel der flächigen Gegenstände 12 erzeugten Luftpolsters ein reibungsarmes Gleiten des Stapels aus dem Stapelschacht 16 in die Ausstossrichtungen A, A' zu zugeordneten Wegförderern 28 ermöglicht.

## Patentansprüche

1. Drehhubtisch mit einer Drehhubtischplatte (14) zur Auflage von flächigen Gegenständen (12), insbesondere Druckereiprodukten, und zwei einander gegenüberliegenden, einen Stapelschacht (16) definierenden Ausstossvorrichtungen (20) mittels denen gestapelte flächige Gegenstände (12) in wenigstens einer Ausstossrichtung (A, A') abtransportiert werden können, wobei der Stapelschacht (16) nach unten wenigstens teilweise durch die Drehhubtischplatte (14) begrenzt ist und die Ausstossvorrichtungen (20) auf einer drehfest mit der Drehhubtischplatte (14) verbundenen Drehplatte (30) angeordnet sind, **gekennzeichnet durch** eine Luftaustrittsöffnungen (34) aufweisende Gleitplatte (26), welche beim Abtransport des Stapels flächiger Gegenstände (12) ein reibungsarmes Gleiten aus dem Stapelschacht (16) in die Ausstossrichtung (A, A') ermöglicht.

2. Drehhubtisch nach Anspruch 1, **dadurch gekennzeichnet, dass** die Gleitplatte (26) in den Stapelschacht (16) hineinreicht.

3. Drehhubtisch nach Anspruch 1 oder 2, **dadurch gekennzeichnet, dass** die Gleitplatte (26) mit der Drehhubtischplatte (14) mitdrehbar angeordnet sind.

4. Drehhubtisch nach Anspruch 3, **dadurch gekennzeichnet, dass** die Gleitplatte (26) an der Drehplatte (30) befestigt ist.

5. Drehhubtisch nach einem der Ansprüche 1 bis 4, **dadurch gekennzeichnet, dass** beim Abtransport des Stapels flächiger Gegenstände (12) die Drehhubtischplatte (14) und die Gleitplatte (26) miteinander im Eingriff stehen.

6. Drehhubtisch nach einem der Ansprüche 1 bis 5, **dadurch gekennzeichnet, dass** aus den Luftaustrittsöffnungen (34) mit Druck beaufschlagte Luft derart entweichen kann, dass sich zwischen dem untersten flächigen Gegenstand des Stapels flächiger Gegenstände (12) und einer diesem untersten flächigen Gegenstand zugewandten Gleitfläche (32) der Gleitplatte (26) ein Luftpolster bildet.

7. Drehhubtisch nach Anspruch 6, **dadurch gekennzeichnet, dass** sich die Luftaustrittsöffnungen (34) zur Gleitfläche (32) hin erweitern.

8. Drehhubtisch nach einem der Ansprüche 1 bis 7, **dadurch gekennzeichnet, dass** die Luftaustrittsöffnungen (34) in einem sich wiederholenden Muster, vorzugsweise wenigstens abschnittsweise regelmässig verteilt, angeordnet sind.

9. Drehhubtisch nach einem der Ansprüche 1 bis 8, **dadurch gekennzeichnet, dass** für eine Zufuhr von mit Druck beaufschlagter Luft zur Gleitplatte (26) eine flexible Luftzufuhrleitung (40, 40A) in einer beweglichen Kabelschleppe (42) geführt ist, die drehhubtischseitig bezüglich der Drehplatte (30) fest angeordnet ist.

10. Drehhubtisch nach einem der Ansprüche 1 bis 9, **dadurch gekennzeichnet, dass** vom Stapelschacht (16) zwei Ausstossrichtungen (A, A') mit diametral entgegengesetztem Richtungssinn definiert werden und je eine Gleitplatte (26) in je einer Ausstossrichtung (A, A') angeordnet ist.

11. Drehhubtisch nach einem der Ansprüche 1 bis 10, **dadurch gekennzeichnet, dass** sich die Gleitplatte (26) zwischen dem Stapelschacht (16) und einem zugeordneten Förderer, insbesondere einem Wegförderer (28), erstreckt.

12. Drehhubtisch nach einem der Ansprüche 1 bis 11, **dadurch gekennzeichnet, dass** auch die Drehhubtischplatte (14) mit Luftaustrittsöffnungen (34) ausgestattet ist, aus denen mit Druck beaufschlagte Luft entweichen kann.

13. Drehhubtisch nach einem der Ansprüche 1 bis 12, **dadurch gekennzeichnet, dass** der Druck der aus der Gleitplatte (26) entweichenden Luft über eine Druckregelvorrichtung (44) vorzugsweise in Abhängigkeit vom Gewicht der aufliegenden flächigen Gegenstände (12) und / oder einem Dreh-Hub-Zustand der Drehhubtischplatte (14) festgelegt ist.

## Claims

1. A rotary lifting table having a rotary lifting table plate (14) for supporting planar articles (12), in particular printed products, and two ejection devices (20) which are located opposite one another and define a stacking shaft (16) and by means of which stacked planar articles (12) can be removed in at least one ejection direction (A, A'), the stacking shaft (16) being bounded at the bottom at least partly by the rotary lifting table plate (14), and the ejection devices (20) being arranged on a turntable (30) connected to the rotary lifting table plate (14) in a rotationally fixed manner, comprising a sliding plate (26) which has air discharge openings (34) and makes possible low-friction sliding from the stacking shaft (16) in the ejection direction (A, A') during the removal of the stack of planar articles (12).

2. The rotary lifting table as claimed in claim 1, wherein the sliding plate (26) extends into the stacking shaft (16).

3. The rotary lifting table as claimed in claim 1 or 2, wherein the sliding plate (26) is arranged to rotate with the rotary lifting table plate (14).

4. The rotary lifting table as claimed in claim 3, wherein the sliding plate (26) is fastened to the turntable (30).

5. The rotary lifting table as claimed in one of claims 1 to 4, wherein the rotary lifting table plate (14) and the sliding plate (26) are in engagement with one another during the removal of the stack of planar articles (12).

6. The rotary lifting table as claimed in one of claims 1 to 5, wherein pressurized air can escape from the air discharge openings (34) in such a way that an air cushion forms between the lowermost planar article of the stack of planar articles (12) and a sliding surface (32), facing this lowermost planar article, of the sliding plate (26).

7. The rotary lifting table as claimed in claim 6, wherein the air discharge openings (34) widen toward the sliding surface (32).

8. The rotary lifting table as claimed in one of claims 1 to 7, wherein the air discharge openings (34) are arranged in a repetitive pattern, preferably in a regularly distributed manner at least in sections.

9. The rotary lifting table as claimed in one of claims 1 to 8, wherein a flexible air feed line (40, 40A) is guided in a movable trailing cable (42) for feeding pressurized air to the sliding plate (26), said trailing cable (42) being fixedly arranged relative to the turntable (30) on the side of the rotary lifting table.

10. The rotary lifting table as claimed in one of claims 1 to 9, wherein two ejection directions (A, A') having a diametrically opposite sense of direction are defined by the stacking shaft (16), and one sliding plate (26) each is arranged in a respective ejection direction (A, A').

11. The rotary lifting table as claimed in one of claims 1 to 10, wherein the sliding plate (26) extends between the stacking shaft (16) and an associated conveyor, in particular an outfeed conveyor (28).

12. The rotary lifting table as claimed in one of claims 1 to 11, wherein the rotary lifting table plate (14) is also provided with air discharge openings (34), from which pressurized air can escape.

13. The rotary lifting table as claimed in one of claims 1 to 12, wherein the pressure of the air escaping from the sliding plate (26) is preferably established as a function of the weight of the supported planar articles (12) and/or of a rotary/lifting state of the rotary lifting table plate (14) via a pressure-regulating device (44).

## Revendications

1. Table élévatrice rotative comprenant un plateau de table élévatrice rotative (14) pour supporter des objets plats (12), en particulier des produits d'imprimerie, et deux dispositifs d'éjection opposés (20) définissant un tunnel de piles (16) au moyen desquels des objets plats empilés (12) peuvent être évacués dans au moins une direction d'éjection (A, A'), le tunnel de piles (16) étant limité vers le bas au moins en partie par le plateau de table élévatrice rotative (14) et les dispositifs d'éjection (20) étant disposés sur un plateau rotatif (30) connecté de manière solidaire en rotation au plateau de table élévatrice rotative (14), **caractérisée par** un plateau de glissement (26) présentant des ouvertures de sortie d'air (34), lequel, lors de l'évacuation de la pile d'objets plats (12), permet un glissement à faible frottement hors du tunnel de piles (16) dans la direction d'éjection (A, A').

2. Table élévatrice rotative selon la revendication 1, **caractérisée en ce que** le plateau de glissement (26) pénètre dans le tunnel de piles (16).

3. Table élévatrice rotative selon la revendication 1 ou 2, **caractérisée en ce que** le plateau de glissement (26) et le plateau de table élévatrice rotative (14) sont disposés de manière à tourner ensemble.

4. Table élévatrice rotative selon la revendication 3, **caractérisée en ce que** le plateau de glissement (26) est fixé sur le plateau rotatif (30).

5. Table élévatrice rotative selon l'une quelconque des revendications 1 à 4, **caractérisée en ce que** lors de l'évacuation de la pile d'objets plats (12), le plateau de table élévatrice rotative (14) et le plateau de glissement (26) sont en prise l'un avec l'autre.

6. Table élévatrice rotative selon l'une quelconque des revendications 1 à 5, **caractérisée en ce que** de l'air sollicité en pression hors des ouvertures de sortie d'air (34) peut s'échapper de telle sorte qu'il se forme un coussin d'air entre l'objet plat le plus inférieur de la pile d'objets plats (12) et une surface de glissement (32) du plateau de glissement (26) tournée vers cet objet plat le plus inférieur.

7. Table élévatrice rotative selon la revendication 6, **caractérisée en ce que** les ouvertures de sortie d'air (34) s'élargissent vers la surface de glissement (32).

8. Table élévatrice rotative selon l'une quelconque des revendications 1 à 7, **caractérisée en ce que** les ouvertures de sortie d'air (34) sont disposées suivant un motif récurrent, de préférence de manière répartie au moins en partie régulièrement.

9. Table élévatrice rotative selon l'une quelconque des revendications 1 à 8, **caractérisée en ce que** pour une alimentation d'air sollicité en pression au plateau de glissement (26), une conduite flexible d'alimentation en air (40, 40A) est guidée dans un chemin de câble mobile (42), qui est disposé fixement du côté de la table élévatrice rotative par rapport au plateau rotatif (30).

10. Table élévatrice rotative selon l'une quelconque des revendications 1 à 9, **caractérisée en ce que** deux directions d'éjection (A, A') sont définies par le tunnel de piles (16) avec un sens de direction diamétralement opposé, et à chaque fois un plateau de glissement (26) est disposé dans chaque direction d'éjection (A, A').

11. Table élévatrice rotative selon l'une quelconque des revendications 1 à 10, **caractérisée en ce que** le plateau de glissement (26) s'étend entre le tunnel de piles (16) et un transporteur associé, en particulier un transporteur d'évacuation (28).

12. Table élévatrice rotative selon l'une quelconque des revendications 1 à 11, **caractérisée en ce que** le plateau de table élévatrice rotative (14) est aussi pourvu d'ouvertures de sortie d'air (34), hors desquelles de l'air sollicité en pression peut s'échapper.

13. Table élévatrice rotative selon l'une quelconque des revendications 1 à 12, **caractérisée en ce que** la pression de l'air s'échappant hors du plateau de glissement (26) est fixée par le biais d'un dispositif de régulation de la pression (44), de préférence en fonction du poids des objets appliqués à plats (12) et/ou d'un état d'élévation-rotation du plateau de table élévatrice rotative (14).
